# EUROPEAN PATENT SPECIFICATION

(11) **EP 1 399 314 B1**
(45) Date of publication and mention of the grant of the patent: **22.04.2009**
(21) Application number: 02727965.2
(22) Date of filing: 10.06.2002
(51) Int. Cl.: B32B 17/10, B01F 13/00

(54) **METHOD AND APPARATUS FOR THE MANUFACTURE OF HEAT-RESISTANT, TRANSPARENT, STRATIFIED ELEMENTS**
VERFAHREN UND VORRICHTUNG ZUR HERSTELLUNG VON HITZEBESTÄNDIGEN UND TRANSPARENTEN VERBUNDSCHEIBEN
PROCEDE ET APPAREIL DESTINES A LA FABRICATION D'ELEMENTS STRATIFIES TRANSPARENTS RESISTANT A LA CHALEUR

(30) Priority: 12.06.2001 IT VI20010134; 31.01.2002 IT TN20020002
(43) Date of publication of application: 24.03.2004
(73) Proprietor: Doors & More S.R.L., 38089 Storo (IT)
(72) Inventor: LYAPIN, Ali, Mogilev, 213030 (BY); MONCHIERI, Aldo, I-25028 Vestone (IT); SAI, Gianfranco, I-38089 Storo (IT)
(74) Representative: Pajola, Stefano
(86) International application number: PCT/IB2002/002115
(87) International publication number: WO 2002/100636

(56) References cited:
- DE-A- 3 643 765
- GB-A- 2 075 353
- US-A- 3 366 994
- US-A- 3 703 425
- US-A- 5 565 273
- US-B1- 6 203 304

## Description

### Technical field

The present invention relates to a method and an apparatus for the manufacture of heat-resistant, transparent, stratified elements of the type consisting of sheets of glass with, arranged in between, a layer of hardened, hydrated, alkali polysilicate.

The invention in question is therefore able to be used for the manufacture of glass panes or panels which are at the same time transparent and heat or fire-resistant.

More particularly, the present method and the apparatus are advantageously intended to be used in fire-breaker doors.

### Background art

The current tendency in the fire prevention sector is to contain the outbreak of fires within closed spaces in order to prevent the entry of air which fuels combustion. For this purpose all the door and window fittings providing communication between the rooms to be isolated are made of heat and fire-resistant material.

Preferably the fittings have transparent surfaces able themselves to withstand heat without collapsing or shattering.

Advantageously, according to the known art, these transparent surfaces consist of stratified elements comprising several superimposed sheets of transparent material, for example glass, with, arranged in between, a material - also transparent and with intumescent characteristics - intended to join together the individual sheets.

"Intumescence" is understood as meaning the property of a material to form a large-volume insulating foam when it is subjected to high temperatures. This foam, retaining gas inside it, increases the resistance to heat transmission as a result of both conduction and irradiation and moreover retains the parts of a pane which may be broken.

At present, in accordance with the art known hitherto, numerous methods for preparing heat-resistant, transparent, stratified elements are known.

For example, heat-resistant, transparent, stratified elements are known where the space between two sheets is filled with an intumescent organic gel in aqueous solution containing a high quantity of water.

The high water content increases the fluidity of the material, facilitates filling of the cavities and increases the intumescent properties.

This constructional solution is not without drawbacks. In fact, the intermediate layer remaining liquid, is able to escape in the event of breakage or solely accidental cracking of one of the sheets or may with time seep through the lateral seals provided. These drawbacks are particularly serious when the stratified elements are used for the manufacture of fire-breaker doors and occur in a particularly obvious manner in the event of impacts. Owing to undesirable leakages, unaesthetic bubbles or even zones without intumescent properties and heat resistance may form inside the stratified element.

In the event of particularly extreme temperatures it may happen that the solution containing the gel solidifies, increasing its volume until it causes breakage of the stratified element.

In order to avoid these drawbacks, more recently compositions have been developed, resulting in the formation of a gel able to solidify during production directly between the sheets of the stratified element. It is also known to use additives in order to lower the freezing point of the gel or increase the adherence thereof to the surfaces of the sheets. It is also known that it is possible to degassify the solution before introducing it into the chamber defined by the parallel sheets in order to limit the formation of bubbles.

In accordance with this latter known embodiment, the solid layer inside the chamber, acting as an element joining together the glass sheets, increases the mechanical strength of the stratified transparent element, allowing also machining thereof by means of cutting.

For example, EP-A-1531 describes a method for the manufacture of fire-resistant glass panes consisting of at least two sheets of glass which are parallel to each other and kept spaced from each other so as to form a sealed chamber for liquids intended to be filled with an aqueous solution - containing at least 65% of water - of intumescent gel based on carbon bonds.

Heat-resistant stratified elements, comprising a solution of hydrated alkali polysilicate as the intumescent element, are also known. In the event of fire, owing to the action of the heat, the water evaporates and the alkali polysilicate is converted into a solid foam thus becoming a good heat insulator and retaining, at the same time, the pieces of the glass panes which may have shattered.

The intumescent properties of alkali polysilicates have been known for some time and for example are described in the text written by J.G. Vail entitled: "Soluble silicates, their properties and uses", Vol. 1 and 2, NY, published in 1952.

Alkali polysilicate has a fairly complex structure which is normally represented in the form xSiO₂·yMe₂O.zH₂O in which xSiO₂ indicates the silica component, yMe₂O indicates the component of the alkali metal oxide, generally lithium, sodium or potassium, and zH₂O the hydration water. The type of polysilicate is defined by means of the molar or weight ratio, SiO₂/Me₂O, of the silica content and alkali metal oxide content.

In the remainder of the present patent, the term "alkali polysilicate" refers to a compound of the type indicated above having a molar ratio SiO₂/Me₂O of between 1.5 to 25.

In the polysilicates used as transparent stratified elements this ratio may vary from 3 to 6.

On the basis of that described in the books "Liquid glass" by P.N. Grigoriev, M.A. Matveev, Moscow, 1956; "The Chemistry of silica", by R.K. ller, 1982; "Soluble and liquid glass" by V.I. Korneev, V.V. Danilov, Leningrad, 1996, and other publications, it is known that when water is present in the system xSiO₂·yMe₂O·zH₂O in large quantities, it also acts as a solvent and the alkali polysilicate remains in solution form, while when it is present in small quantities it behaves as a copolymerizer and the solution solidifies. In fact, when water is removed from an aqueous solution of alkali polysilicate, for example by means of natural evaporation or by means of heat, the hydrated alkali polysilicate passes from the liquid transparent form of an aqueous solution to the solid transparent form, retaining a considerable quantity of hydration water.

US-A-4,190,698 describes a method for the manufacture of stratified elements consisting of a plurality of glass sheets with an alkali polysilicate arranged in between. The polysilicate is prepared by means of mixing of an aqueous solution of alkali silicate having a silica/metal oxide ratio of about 3.3 with a dispersion of colloidal silica in water containing about 30% by weight of silica.

In accordance with the method described in the abovementioned US-A-4,190,698, the polysilicate layer is first spread on one side of a first sheet of glass and is then hardened by means of drying in a heated environment. At this point, a second sheet is arranged with pressure on the first sheet. These steps are repeated until the desired thickness or number of final sheets is reached. The hydrated alkali polysilicate obtained has metal silica/metal oxide ratio of between 3.3 and 5.

Drawbacks of this known method consist in the difficulties of regulating the parameters which govern the drying process, the difficulties of ensuring a uniform distribution of the solution on the sheet, the difficulties of achieving a constant thickness of the layers arranged in between and the difficulties of combining the sheets in a sandwich structure without trapping undesirable air bubbles inside.

US-A-5,565,273 describes a method for the manufacture of transparent stratified elements by means of pouring, into the spaces between the sheets, an aqueous solution containing alkali polysilicate and colloidal silica with an overall molar ratio SiO₂/Me₂O greater than 4:1 and with a water content of between 44 and 65% by weight. Without drying, the solution hardens, incorporating all the water present since there is no removal thereof.

Methods are also known where the aqueous solution of hydrated alkali polysilicate is first inserted in liquid form inside the chamber defined by the two sheets and is then made to solidify by means of the action of hardening reagents and/or accelerators and/or retardants.

A drawback of these known methods is the need to add these components in order to induce or prevent polymerization and control the reaction speed.

Moreover, these same added components may reduce the transparency or modify the refraction index of the stratified element or also not be stable to UV radiation, becoming less transparent and opaque over time.

Moreover, a high ratio SiO₂/Me₂O reduces the transparency of the polysilicate and therefore its popularity on the market.

### Summary of the invention

The main object of the present invention is to eliminate the abovementioned drawbacks by providing a method and an apparatus for the manufacture of heat-resistant, transparent, stratified elements, which Is simple and low-cost to achieve and allows stratified elements with optimum fire-resistant properties to be obtained.

A particular object of the present invention is to provide a method for the manufacture of transparent stratified elements which allows the transparency and the refractive index to be controlled.

A further object of the invention is to obtain a transparent stratified element which has a high resistance to UV radiation and which does not vary its colour with time.

Another object of the present invention is to obtain a transparent stratified element which has a high mechanical strength in particular with regard to impacts.

Another object of the present invention is that of providing a method which allows complete filling of the chambers located between the sheets which form part of the transparent stratified elements to be controlled in a simple manner.

Another object of the present invention is that of providing a method for the manufacture of transparent stratified elements which uses good-quality raw materials available on the market and at a low cost.

Another object of the present invention is that of providing a method which allows the manufacture of transparent stratified elements of the desired size without requiring complex and costly cutting operations.

The abovementioned objects, together with others, are all achieved by a method for the manufacture of transparent stratified elements in question, as claimed in claim 1.

Advantageously the aqueous solution of alkali polysilicate and the colloidal silica dispersion, which compose the intumescent liquid mixture, are mixed thoroughly with each other with the aid of ultrasound.

Moreover, the application of a vacuum and ultrasound during the degassing step causes expulsion of dissolved gases and the evaporation of solvent water.

As a result of the present method and apparatus it is possible to produce easily transparent stratified elements with excellent optical properties which are heat-resistant and composed of several transparent elements, for example, made of glass, with a solid transparent intumescent material arranged in between.

The novel solution according to the present invention may be advantageously used in the construction of heat-resistant glass walls or door and window fittings, for example fire-breaker doors, or In fire refuge shelters or premises which must be able to withstand high temperatures.

### Brief description of the drawings

Further features and advantages of the invention will be more clearly understood from the detailed description of a preferred, but not exclusive, embodiment of a apparatus for the manufacture of heat-resistant, transparent, stratified elements, which follows, furnished by way of a non-limiting example with reference to attached drawings in which:
- FIG. 1 shows a heat-resistant transparent stratified element;
- FIG. 2 shows a functional diagram of an embodiment implementing the method for manufacturing heat-resistant stratified elements according to the present invention.

### Detailed description of a preferred embodiment

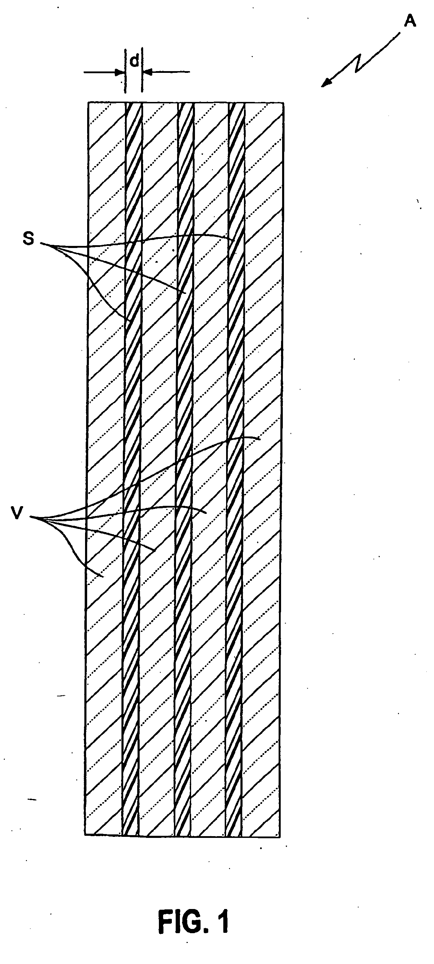

The accompanying Fig. 1 denotes overall with A a heat-resistant, transparent, stratified element provided in accordance with the present invention and essentially formed, as will be described more fully below, by two or more superimposed transparent sheets V, made of glass or other transparent material, such as polycarbonate for example, between which layers S of hardened alkali polysilicate are arranged, joining together rigidly the said sheets.

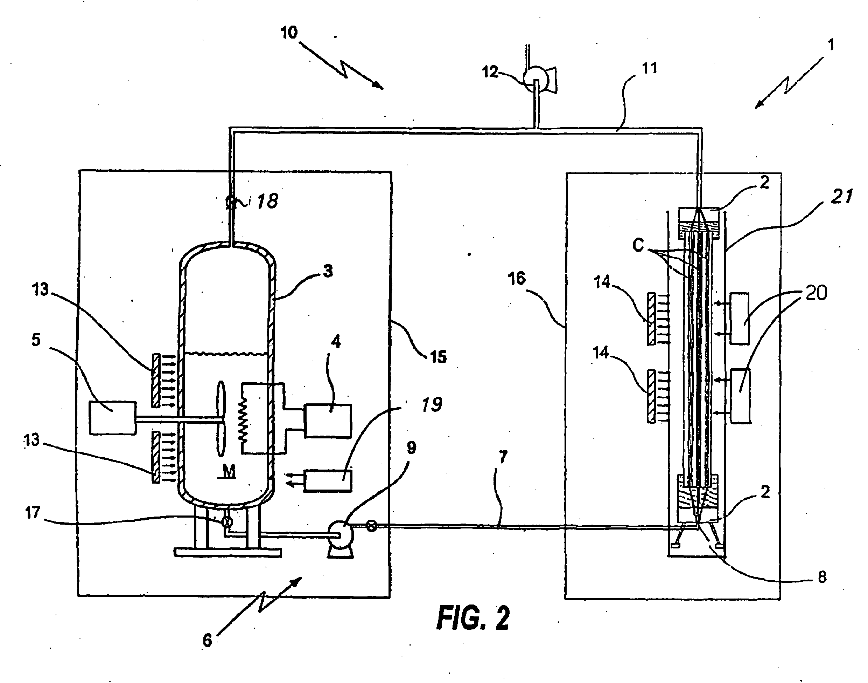

With reference to the drawing shown in the accompanying Fig. 2, 1 denotes overall a functional diagram of an apparatus for the manufacture of heat-resistant stratified elements according to the invention. It comprises retaining means 2 intended to support a plurality of transparent sheets V in a preferably vertical position, with their surfaces arranged facing each other and parallel, being spaced from each other by a distance d of between 0.1 mm and 20 mm, preferably between 0.1 mm and 3 mm, so as to define a corresponding plurality of receiving chambers C.

In the case of sheets with a limited surface area, this distance d may be between 2 cm and 9 cm.

Each of the chambers C is sealed peripherally by the retaining means 2 with the aid of seals (not shown in detail) so as to make them suitable for sealably containing any fluid introduced into them under pressure or under vacuum.

The apparatus 1 also envisages a container 3 which is intended to receive an aqueous solution of alkali polysilicate and colloidal silica dispersed in water and with which heating means 4 for heating up the solution contained therein, stirring means 5 and at least one ultrasound source 19 for mixing inside it the abovementioned components are operationally associated, resulting in the formation of an intumescent liquid mixture M.

The apparatus also comprises circulation means 6 for transferring the intumescent liquid mixture M from the container 3 to the retaining means 2 and therefore to the chambers C to which the latter are connected.

In greater detail, the circulation means 6 comprise a first duct 7 which, in accordance with the diagram shown in Fig. 2, connects the container 3 to the retaining means 2 by means of an opening 8 formed at the bottom of the said retaining means 2. In accordance with this configuration, as will be clarified more fully below, it is therefore possible to convey, by means of a pressure difference and/or a pump 9, the intumescent liquid mixture M from the container 3 to the chambers C, causing the gradual filling thereof from below. With this solution it is possible to limit the formation of bubbles.

According to another configuration, the intumescent liquid mixture M is introduced laterally into the chambers C.

In accordance with a further aspect of the present invention, the apparatus 1 is provided with degassing means 10 for performing extraction of gases dissolved in the intumescent liquid mixture M and, as will be specified further below, for evacuation of evaporated water part. These means 10 advantageously consist of a second duct 11, which connects the top part of the container 3 to the top part of the retaining means 2, the valve 18 for regulating the vacuum inside the container 3, located on the duct 11, and suction means 12 associated with the second duct 11 for subjecting the container 3 and the retaining means 2 to the desired degree of negative pressure or vacuum.

According to the invention, the apparatus is provided with at least one source 13 or 14 of electromagnetic radiation having a frequency of less than 30 GHz and at least one ultrasound source 19 or 30, which are intended to irradiate the intumescent liquid mixture M contained in the container 3 and/or contained inside the receiving chambers C.

Advantageously, a first electromagnetic radiation source 13 and a first ultrasound source 19 and the heating means 4 mentioned above, all associated with the container 3 and operationally acting on the mixture M, are incorporated in a first oven 15 indicated in Fig. 2.

Preferably, the heating means 4, the first electromagnetic radiation source 13 and the first ultrasound source 19 combine to cause evaporation of a water part of the mixture M intended to be evacuated by the degassing means 10.

For this purpose, the container 3 inside which mixing of the solutions of alkali polysilicate and colloidal silica is performed using the stirring means 5 and/or ultrasound is made of material which is transparent to electromagnetic radiation.

Similarly, the retaining means 2 supporting the sheets V may be inserted in a second oven 16 provided with a second electromagnetic radiation source 14, with a second ultrasound source 20 and with conventional heating means not shown in the Figures.

The ovens 15, 16 are obviously especially screened with respect to the exterior by means of walls able to absorb the electromagnetic radiation, as is moreover required by the standards governing safety at the place of work.

Suitably the oven 16 may comprise a tank 21 able to receive liquids, for example water, inside which the retaining means 2 supporting the sheets V are immersed.

In turn, the two ovens 15, 16 may also be incorporated in a single structure for the sake of constructional simplicity.

From a functional point of view, the apparatus 1 described hitherto from a mainly structural point of view operates as is described here below.

Initially the desired number of transparent sheets V is arranged between the retaining means 2 which keep them vertical and at the desired distance d.

The retaining means 2 with the sheets V are placed in the tank 21 containing water so as to perform washing of the surfaces of the said sheets.

Suitably, this operation is facilitated by the presence, in the water, of compounds with an ion exchange function, pH correctors and surfactants and by the simultaneous action of ultrasound generated by the source 20. After this operation, the sheets V are sealed peripherally.

For this purpose, the said retaining means 2 seal, by means of seals, the sheets V peripherally so as to define the receiving chambers C.

The container 3 is then filled to the desired level with the solution of alkali polysilicate and the aqueous dispersion of colloidal silica, which are then mixed together by the stirring means 5 and/or the action of ultrasound.

At this point, the intumescent liquid mixture M is subjected to irradiation by means of electromagnetic radiation, which completes the mixing thereof, mixing together the components thoroughly and inducing within them the conditions for subsequent solidification.

Advantageously, the mixture M may at the same time be heated to the desired temperature by the heating means 4.

At the same time as irradiation and heating or, alternatively, during subsequent stages, the degassing means 10 perform, via the suction means 12, extraction through the second duct 11 of a certain quantity of water evaporated as a result of the effect of heating and/or the electromagnetic radiation and/or the ultrasound.

In short, it can therefore be stated that the combined action of vacuum, heat, electromagnetic radiation, and ultrasound causes complete degassing of the liquid mass contained in the container 3, with homogeneous mixing of its components, alkali polysilicate, colloidal silica and water, which result in a mixture M having a high degree of transparency.

Once these operations have been terminated, the mixture M is conveyed by means of the circulation means 6 into the receiving chambers C, passing through the opening 8 formed in the retaining means 2. For this purpose, opening of at least one valve 17 provided on the first duct 7 is actuated.

At the same time, by means of the second duct 11 and the regulating valve 18, a predefined degree of vacuum is generated in order to favour the complete filling of the chambers C and improved wetting of the sheets V, preventing the formation of gaseous bubbles.

Advantageously filling is performed with simultaneous ultrasound irradiation of the mixture M. In this way it is possible to fill the chambers C easily and rapidly with a very viscous liquid mixture also in the case of very small spaces d between the sheets V, of less than 5 millimetres.

The back-pressure produced externally by the liquid present in the tank 21 counterbalances the internal pressure produced by the polysilicate solution, preventing breakage thereof.
At this point, the entire stratified element A may be subjected to a second stage of irradiation with electromagnetic radiation generated by the second source 14 in order to accelerate the process of solidification of the mixture M and form the layers S of hardened polysilicate.

The present invention also comprises a method for manufacture of heat-resistant, transparent, stratified elements A, which may be advantageously implemented by means of the apparatus described above, to which reference will be made by way of example in the description which follows.

The method according to the invention comprises the following operating steps: a) a step involving preparation of the sheets V of transparent material, between the retaining means 2 so as to define the corresponding receiving chambers C; b) a step involving mixing, in the container 3, by means of ultrasound waves with an intensity of between 2×10⁻³ W/cm³ and 0.2 W/cm³ and with a frequency of up to 1 MHz, of the aqueous solution of alkali polysilicate with the colloidal silica dispersed in the water, resulting in the formation of the intumescent liquid mixture M preferably with a molar ratio SiO₂/Me₂O of between 3 and 5 and with a density greater than 1300 Kg/m³; c) a first stage of irradiation with electromagnetic radiation of the intumescent liquid mixture M thus obtained; d) a step of degassing of the mixture M, subject to the effect of ultrasound with a frequency of up to 1 MHz with extraction of at least a part of water in the vapour phase; e) a step involving filling, subject to the effect of ultrasound having a frequency of up to 1 MHz, of the receiving chambers C with the mixture M; f) a step involving hardening of the mixture M inside the intumescent chambers C.

The sheets V made of transparent material are located at a distance d of between 0.1 mm and 20 mm, preferably at a distance of between 0.1 and 3 mm.

Transparent sheets V with a limited surface area may be arranged at a distance of between 20 and 90 mm, preferably between 70 mm and 80 mm.

The liquid alkali silicate in the form of an aqueous solution and the colloidal silica solution used in the manufacturing method in question can be easily found commercially.

In fact, on the market solutions of sodium and/or potassium silicate in water with concentrations of between 25% and 50% by weight and SiO₂/Me₂O ratios of between 1.5 and 4 are available.

The colloidal silica consists of sub-microscopic particles - with a diameter of about 10 nm - of amorphous silica dispersed in water. In commerce, solutions with a silica content variable from 15 to 50% by weight, typically used for forming ceramic bonds in fibres or refractory materials are available.

Both the components are therefore known, can be easily found and are extremely low-cost.

In accordance with the method in question, the mixing of these two components is preferably performed in two steps, i.e. a first step using conventional stirring means 5 and/or ultrasound produced by the source 19 and a second step, preferably after the first step, with a source of electromagnetic radiation 13 able to irradiate the mixture M, causing thorough mixing of its components.

The electromagnetic radiation may be in the range of microwaves with a frequency of between 1 GHz and 30 GHz or the radiofrequency range with a frequency of between 5 KHz and 50 KHz.

Preferably the microwaves have a frequency of between 1 and 3 GHz. The irradiation with microwaves is performed for a few minutes, resulting in a total power absorption of the mixture M preferably of between 0.5 and 4 W/cm³.

The action of the microwaves on the polar molecules, such as water, allow the transfer of energy directly to the molecules without intermediate steps, resulting in efficient activation thereof. Therefore the microwaves are particularly suitable both as heating means and as means for accelerating the chemical reactions. More particularly, according to the invention, the effect of the microwaves produces intense mixing of the components of the mixture M, thus resulting in efficient polymerization of the alkali polysilicate with consequent hardening without the addition of other reagents.

Advantageously the reaction is facilitated by the simultaneous heating due to the action of the said microwaves on the polar molecules present.

Surprisingly this effect results in improved transparency and an improved refractive index of the stratified element A thus obtained.

Preferably, in accordance with the existing regulations in this area, the electromagnetic radiation in the radiofrequency range has a frequency close to 27.12 MHz.

Radiofrequency technology also allows energy transfer selectively to the water molecules present without intermediate steps.

However, the intumescent liquid mixture M may also be heated by the abovementioned heating means 4, so as to favour mixing of its components and help evaporation of a part of water.

In accordance with a further aspect of the method, in order to improve further the polymerization of the components of the mixture M, a second irradiation step for irradiation of the mixture M inside the receiving chamber C may be envisaged.

By means of the degassing step, the gases present in the mixture M and incorporated or dissolved in the preceding treatments or present in the starting solutions as acquired from the supplier, are extracted together with the part of water evaporated by the action of the ultrasound, the electromagnetic radiation and/or the heating, allowing polymerization of the polysilicate.

Degassing is performed by subjecting the intumescent liquid mixture M to a vacuum preferably in the range of between 20 and 500 millibars.

Advantageously, this operation is performed with simultaneous application of ultrasound.

In accordance with operation of the plant shown by way of example in Fig. 2, the step of filling of the receiving chamber C with the mixture M is performed from below using the same chamber in vacuum conditions following activation of the suction means 12 and owing to the difference in pressure regulated by the valve 18 between the container 3 and the receiving chamber C.

According to another configuration, the filling step is performed by introducing laterally the intumescent liquid mixture M into the receiving chambers C.

Operationally speaking, this filling operation is facilitated by the application of ultrasound for a duration of between 10 and 50 minutes.

Once the hardening step has terminated, when the polysilicate layer which has filled the chambers C has hardened, the stratified element A is removed from the second oven 16, releasing it from the retaining means 2.
Table 1 shows some non-limiting examples of compositions of alkali polysilicates solutions (of sodium, of potassium, of lithium or mixtures thereof) and colloidal silica.

**Table 1**

| | Composition (% by weight) | |
|---|---|---|
| Sodium polysilicate | Na₂O | 27.8 |
| | SiO₂ | 8.3 |
| | Molar weight SiO₂ / Na₂O | 3.45 |
| Potassium polysilicate | K₂O | 23.7 |
| | SiO₂ | 10.5 |
| | Molar weight SiO₂ / K₂O | 3.54 |
| Colloidal silica 30 | Na₂O | 0.3 |
| | SiO₂ | 30 |
| Colloidal silica 40 | Na₂O | 0.4 |
| | SiO₂ | 40 |

Table 2 shows some non-exhaustive examples of preferred formulations for the preparation of the mixture M.

**Table 2**

| | Composition (% by weight) | | | |
|---|---|---|---|---|
| Formulation 1 | Sodium polysilicate | 91 | SiO₂ | 28 |
| | Colloidal silica 30 | 9 | Na₂O | 7.6 |
| | | | Water | 64.4 |
| | | | SiO₂/Na₂O (molar) | 3.8 |
| Formulation 2 | Sodium polysilicate | 87 | SiO₂ | 28 |
| | Colloidal silica 30 | 13 | Na₂O | 7.2 |
| | | | Water | 64.8 |
| | | | SiO₂/Na₂O (molar) | 4 |
| Formulation 3 | Sodium polysilicate | 90 | SiO | 29 |
| | Colloidal silica 40 | 10 | Na₂O | 7.5 |
| | | | Water | 63.5 |
| | | | SiO/Na₂O (molar) | 4 |
| Formulation 4 | Sodium polysilicate | 81 | SiO | 28 |
| | Colloidal silica 30 | 19 | Na₂O | 7 |
| | | | Water | 65 |
| | | | SiO/Na₂O (molar) | 4.1 |
| Formulation 5 | Sodium polysilicate | 75.3 | SiO₂ | 30.7 |
| | Colloidal silica 40 | 24.7 | Na₂O | 6.3 |
| | | | Water | 63 |
| | | | SiO/Na₂O (molar) | 5 |
| Formulation 6 | Potassium polysilicate | 94 | SiO | 24 |
| | Colloidal silica 30 | 6 | K₂O | 10 |
| | | | Water | 66 |
| | | | SiO/K₂O (molar) | 3.8 |
| Formulation 7 | Potassium polysilicate | 90 | SiO₂ | 24 |
| | Colloidal silica 30 | 10 | K₂O | 9.5 |
| | | | Water | 66.5 |
| | | | SiO₂/K₂O (molar) | 4 |
| Formulation 8 | Potassium polysilicate | 92.5 | SiO₂ | 25 |
| | Colloidal silica 40 | 7.5 | K₂O | 10 |
| | | | Water | 65 |
| | | | SiO₂/K₂O (molar) | 4 |
| Formulation 9 | Potassium polysilicate | 85 | SiO₂ | 25 |
| | Colloidal silica 30 | 15 | K₂O | 9 |
| | | | Water | 66 |
| | | | SiO₂/K₂O (molar) | 4.3 |
| Formulation 10 | Potassium polysilicate | 80 | SiO₂ | 27 |
| | Colloidal silica 40 | 20 | K₂O | 8 |
| | | | Water | 65 |
| | | | SiO₂/K₂O (molar) | 5.3 |

### Example 1

Using Formulation 1 in Table 2, stratified elements A were constructed, said elements being composed of four sheets V of glass with a thickness 4.5 mm kept parallel at a distance of 1 mm so as to form at the end of the process transparent stratified elements A with a final thickness A of 21 mm.

The initial solution indicated in the first solution of Table 2, after mixing the polysilicate and colloidal silica solutions for 10 minutes with ultrasound at an intensity of 2x10⁻² W/cm³ and frequency of up to 1 MHz, is irradiated for a few minutes with microwaves at an intensity of 0.8 W/cm³ and then introduced, from below with the aid of a vacuum and subject to the effect of ultrasound at an intensity of 5x10⁻² W/cm³ and frequency of up to 1 MHz, into the chambers C between the sheets V at a speed of between 0.1 and 2x10⁻⁵ m³/sec.

The coefficient of refraction of the stratified elements A thus obtained is between 1.45 and 1.5. The coefficient of transparency, defined as the ratio between the quantity of light transmitted and the total quantity of incident light, is 0.95 for radiation emitted by filament lamps, 0.85 for mercury vapour lamps and 0.4 for gamma radiation. After undergoing accelerated ageing tests and after heating to 85°C for 5 hours and irradiation with UV radiation at an intensity of 8 10⁵ lum/m², there were no visible changes in the properties.

### Example 2

Stratified elements A as described in Example 1 were constructed using Formulation 6 in Table 2 and irradiated for a few minutes with microwaves at an intensity of 1.2 W/cm³. The stratified elements A thus obtained have the same optical properties obtained in the preceding example.

### Example 3

Stratified elements A as described in Example 1 were constructed using Formulation 10 in Table 2 and irradiated for a few minutes with microwaves at an intensity of 1 W/cm³. The stratified elements A thus obtained have the same optical properties as in Example 1.

An advantage of the method according to the present invention consists in the fact of obtaining a mixture M which is very fluid, easy to insert into the chambers C between the sheets V and which hardens quickly owing to the effect of microwave radiation and removal of water.

Operationally speaking, control of the filling speed is performed easily by regulating the vacuum.

Advantageously the optical properties are regulated simply by the intensity of the electromagnetic radiation and by the quantity of water removed.

However, it will be possible to introduce into the liquid mixture M a percentage of additive in order to modify the mechanical properties and the intumescence of the protective layer, for example up to 10% of silane and/or up to 10% of saccharides, without thereby departing from the scope of protection of the present invention.

The invention thus conceived therefore achieves the intended objects.

As a matter of fact, it may assume, in its practical embodiment, other forms and configurations different from those illustrated above without, departing from the present scope of protection.

Moreover all the details may be replaced by technically equivalent elements, and the dimensions and forms used may be any depending on the requirements.

## Claims

1. Method for the manufacture of heat-resistant, transparent, stratified elements (A), comprising the following steps:
a) preparing at least two sheets of transparent material (V) substantially facing each other and able to define therebetween at least one receiving chamber (C);
b) mixing, in a container (3), an aqueous solution of alkali polysilicate with colloidal silica dispersed in water, with consequent formation of an intumescent liquid mixture (M);
c) heating of said intumescent liquid mixture (M);
d) degassing of said intumescent liquid mixture (M) with extraction of at least a part of water in the vapour phase;
e) filling of said receiving chamber (C) with said intumescent liquid mixture (M);
f) hardening, by means of polymerization, of said intumescent liquid mixture (M) inside said receiving chamber (C);
**characterised by** providing at least one first irradiation step of said intumescent liquid mixture (M) by means of electromagnetic radiation at a frequency less than 30 GHz to improve mixing and polymerization thereof.

2. Method according to Claim 1, **characterized in that** said electromagnetic radiation is in the microwave range with a frequency of between 1 GHz and 30 GHz, and preferably between 1 GHz and 3 GHz.

3. Method according to Claim 1, **characterized in that** said electromagnetic radiation is in the radiofrequency range with a frequency of between 5 KHz and 50 MHz and preferably close to 27.12 MHz.

4. Method according to Claim 1, **characterized in that** said mixing step b) is performed by means of ultrasound for a duration of between 5 and 15 minutes.

5. Method according to Claim 4, **characterized in that** said ultrasound has a frequency of up to 1 MHz and an intensity of between 2x10⁻³ and 0.2 W/cm³.

6. Method according to Claim 1, **characterized in that** said at least one first Irradiation step is carried out before said filling step and in said container (3) with an intensity of between 0,5 and 3 W/cm³ and for a duration of between 2 and 20 minutes.

7. Method according to Claim 1, **characterized in that** it comprises at least one second irradiation step after said filling step and inside said receiving chamber (C).

8. Method according to Claim 1, **characterized in that** said intumescent liquid mixture (M), after said filling step and inside said receiving chamber is subjected to ultrasound for a duration of between 10 and 50 minutes.

9. Method according to Claim 1, **characterized in that** said degassing step d) is performed by subjecting said intumescent liquid (M) to a vacuum of between 20 millibars and 500 millibars.

10. Method according to one or more of the preceding claims, **characterized in that**, during said degassing step, said liquid mixture (M) is subjected to ultrasound for a duration of between 10 and 50 minutes.

11. Method according to one or more of the preceding claims, **characterized in that** said heating step and/or said irradiation step involve a partial extraction of water from said intumescent liquid mixture (M) by means of evaporation.

12. Method according to Claim 1, **characterized in that**, during said preparation step a), the sheets are arranged at a distance d relative to each other of between 0.1 and 20 mm.

13. Method according to Claim 1, **characterized in that** during said preparation step a), the sheets are arranged at a distance d relative to each other of between 2 and 9 cm.

14. Method according to one or more of the preceding claims, **characterized in that** said sheets are positioned inside a receptacle containing water.

15. Method according to Claim 1, **characterized in that** said step involving filling of said receiving chamber (C) with said intumescent liquid mixture (M) is performed by filling from below.

16. Method according to Claim 1, **characterized in that** said step of filling sold receiving chamber (C) with said intumescent liquid mixture (M) is performed by means of a difference in vacuum.

17. Method according to Claim 1, **characterized in that** said filling step is performed by introducing said intumescent liquid, mixture (M) laterally into said receiving chamber (C).

18. Method according to one or more of the preceding claims, **characterized in that** said step of filling of said receiving chamber (C) with said intumescent liquid mixture (M) is performed with simultaneous application of ultrasound.

19. Method according to Claim 1, **characterized in that** said step b) of mixing said aqueous solution of alkali polysilicate with said colloidal silica dispersed in water results in the formation of an intumescent liquid mixture (M) with a molar ratio SiO₂/Me₂O of between 3 and 5.

20. Method according to Claim 1, **characterized in that** said mixing step b) results in the formation of an intumescent liquid mixture (M) with a density greater than 1300 kg/m³.

21. Method according to Claim 1, **characterized in that** said mixing step is performed also using additives chosen from among saccharides and/or silanes inserted Inside said container (3).

22. Method according to Claim 1, **characterized in that** said mixing step is performed using said hydrated alkali polysilicate in solution form, chosen from the family comprising sodium polysilicate, potassium polysilicate, lithium polysilicate and mixtures thereof.

23. Method according to Claim 1, **characterized in that** said sheets of transparent material are made of materials chosen among the group comprising glass, polycarbonate and similar transparent materials.

24. Method according to one or more of the preceding claims, **characterized by** adjusting the optical properties of each stratified element (A), by varying the intensity and the duration of the electromagnetic radiation applied to said intumescent liquid mixture (M) during said first irradiation step or during said second irradiation step.

25. Method according to one or more of the preceding claims, **characterized by** adjusting the optical properties of each stratified element (A) by varying the intensity and the duration of the ultrasound applied to said intumescent liquid mixture (M) during said mixing step b) and/or during said degassing step d) and/or during said filling step.

26. Method according to one or more of the preceding claims, **characterized by** adjusting the optical properties of each stratified element (A) by varying the quantity of water extracted during said degassing step d).

27. Apparatus for the production of heat-resistant, transparent, stratified elements which can be obtained by means of the method according to one or more of the preceding claims, comprising:
- retaining means (2) intended to support two or more parallel, facing, transparent sheets (V) which are spaced from each other so as to define at least one corresponding hermetically sealed receiving chamber (C) for fluids;
- at least one container (3) intended to receive an aqueous solution of alkali polysilicate and colloidal silica dispersed in water which are able to form an intumescent liquid mixture (M);
- circulation means (6) for transferring said intumescent liquid mixture (M) from said container (3) to said chamber (C) via said retaining means (2);
- degassing means (10) connected to said container (3) and/or to said retaining means (2) so as to subject said intumescent liquid mixture (M) to a vacuum with consequent extraction of dissolved gases and a part of water in the vapour phase;
**characterised by** comprising at least one source of electromagnetic radiation (13, 14) irradiating said intumescent liquid mixture (M) and having a frequency of less than 30 GHz to improve mixing and polymerization of said intumescent liquid mixture (M).

28. Apparatus according to Claim 27, **characterized in that** it comprises stirring means (5) associated with said container (3) for mixing said aqueous solution of alkali polysilicate with said colloidal silica dispersed in water.

29. Apparatus according to Claim 27, **characterized in that** it comprises heating means (4) associated with said container (3) for heating said intumescent liquid mixture (M).

30. Apparatus according to Claim 27, **characterized in that** said circulation means (6) comprise a first duct (7) for connecting said container (3) and an opening (8) formed underneath said retaining means (2) and at least one pump (9) inserted in said duct (7) for conveying said intumescent liquid mixture (M) Inside said receiving chambers (C), causing gradual filling thereof from below.

31. Apparatus according to Claim 27, **characterized in that** said at least one electromagnetic radiation source comprises a first irradiation source (13) capable of irradiating said intumescent liquid mixture (M) contained in said container (3).

32. Apparatus according to Claim 27, **characterized in that** said at least one electromagnetic radiation source comprises one second source (14) of electromagnetic radiation, capable of irradiating said intumescent liquid mixture (M) inside said receiving chambers (C).

33. Apparatus according to Claim 27, **characterized in that** it comprises at least one ultrasound source (19) able to sonorize said intumescent liquid mixture (M) and a second ultrasound source (20) able to irradiate said intumescent liquid mixture (M) inside said receiving chambers (C).

34. Apparatus according to Claim 27, **characterized in that** said degassing means (10) comprise a second duct (11) for connecting the top part of said container (3) to the top part of said retaining means (2), a regulating valve inserted in said second duct (11), and suction means (12) connected to said second duct (11) for subjecting said container (3) and said retaining means (2) to a vacuum.

35. Apparatus according to Claim 27, **characterized in that** it comprises at least one tank (21) containing a liquid inside which the retaining means (2) supporting two or more parallel facing sheets (V) are immersed.

36. Apparatus according to Claim 27, **characterized in that** said intumescent liquid mixture (M) is chosen so as to have a molar ratio SiO₂/Me₂O of between 3 and 5.

## Patentansprüche

1. Verfahren zur Herstellung von hitzebeständigen, transparenten, geschichteten Elementen (A) mit den folgenden Schritten:
a) Vorbereiten von mindestens zwei Lagen von transparentem Material (V), die sich im wesentlichen gegenüber liegen und in der Lage sind dazwischen mindestens eine aufnehmende Kammer (C) zu bilden,
b) Mischen in einem Behälter (3) einer wässrigen Lösung aus alkalischem Polysilikat mit kolloidem Silikat, das dispergiert ist in Wasser, mit anschließender Bildung einer anschwellenden, flüssigen Mischung (M),
c) Erhitzen der anschwellenden, flüssigen Mischung (M),
d) Entgasen der anschwellenden, flüssigen Mischung (M) mit Entzug mindestens eines Teils des Wassers in der Dampfphase,
e) Füllen der aufnehmenden Kammer (C) mit der anschwellenden, flüssigen Mischung (M),
f) Härten mittels Polymerisation der anschwellenden, flüssigen Mischung (M) in der aufnehmenden Kammer (C), **gekennzeichnet durch** Vorsehen von mindestens einem ersten Bestrahlungsschritt der anschwellenden, flüssigen Mischung (M) mittels elektromagnetischer Strahlung bei einer Frequenz von weniger als 30 GHz, um deren Mischung und Polymerisation zu verbessern.

2. Verfahren gemäß Anspruch 1, **dadurch gekennzeichnet, dass** die elektromagnetische Strahlung im Mikrowellenbereich ist bei einer Frequenz von zwischen 1 GHz und 30 GHz und vorzugsweise zwischen 1 GHz und 3 GHz.

3. Verfahren gemäß Anspruch 1, **dadurch gekennzeichnet, dass** die elektromagnetische Strahlung im Radiofrequenzbereich ist bei einer Frequenz von zwischen 5 KHz und 50 MHz und vorzugsweise nahe bei 27,12 MHz.

4. Verfahren gemäß Anspruch 1, **dadurch gekennzeichnet, dass** der Schritt b) des Mischens durchgeführt wird mittels Ultraschall während einer Dauer von zwischen 5 und 15 Minuten.

5. Verfahren gemäß Anspruch 4, **dadurch gekennzeichnet, dass** der Ultraschall eine Frequenz hat von bis zu 1 MHz und eine Intensität von zwischen 2 x 10⁻³ und 0,2 W/cm³.

6. Verfahren gemäß Anspruch 1, **dadurch gekennzeichnet, dass** der mindestens eine erste Bestrahlungsschritt durchgeführt wird vor dem Schritt des Füllens und in den Behälter (3) mit einer Intensität von zwischen 0,5 und 3 W/cm³ und während einer Dauer von zwischen 2 und 20 Minuten.

7. Verfahren gemäß Anspruch 1, **dadurch gekennzeichnet, dass** mindestens ein zweiter Bestrahlungsschritt vorgesehen ist nach dem Schritt des Füllens und in die aufnehmende Kammer (C).

8. Verfahren gemäß Anspruch 1, **dadurch gekennzeichnet, dass** die anschwellende, flüssige Mischung (M) nach dem Schritt des Füllens und in die aufnehmende Kammer Ultraschall ausgesetzt ist während einer Dauer von zwischen 10 und 50 Minuten.

9. Verfahren gemäß Anspruch 1, **dadurch gekennzeichnet, dass** der Schritt d) des Entgasens **dadurch** ausgeführt wird, dass die anschwellende, flüssige Mischung (M) einem Vakuum von zwischen 20 millibar und 500 millibar ausgesetzt wird.

10. Verfahren gemäß einem oder mehreren der vorhergehenden Ansprüche, **dadurch gekennzeichnet, dass** während des Schritts des Entgasens die anschwellende, flüssige Mischung (M) Ultraschall ausgesetzt ist während einer Dauer von zwischen 10 und 50 Minuten.

11. Verfahren gemäß einem oder mehreren der vorhergehenden Ansprüche, **dadurch gekennzeichnet, dass** der Schritt des Erhitzens und/oder der Bestrahlungsschritt einen teilweisen Entzug von Wasser aus der anschwellenden, flüssigen Mischung (M) mittels Verdampfen umfasst.

12. Verfahren gemäß Anspruch 1, **dadurch gekennzeichnet, dass** während des Schritts a) des Vorbereitens die Lagen mit einem Abstand d relativ zueinander von zwischen 0,1 und 20 mm angeordnet sind.

13. Verfahren gemäß Anspruch 1, **dadurch gekennzeichnet, dass** während des Schritts a) des Vorbereitens die Lagen mit einem Abstand d zwischen 2 und 9 cm angeordnet sind.

14. Verfahren gemäß einem oder mehreren der vorhergehenden Ansprüche, **dadurch gekennzeichnet, dass** die Lagen innerhalb eines Behälters angeordnet sind, der Wasser enthält.

15. Verfahren gemäß Anspruch 1, **dadurch gekennzeichnet, dass** der Schritt des Füllens der aufnehmenden Kammer (C) mit der anschwellenden, flüssigen Mischung (M) durch Füllen von unten erfolgt.

16. Verfahren gemäß Anspruch 1, **dadurch gekennzeichnet, dass** der Schritt des Füllens der aufnehmenden Kammer (C) mit der anschwellenden, flüssigen Mischung (M) mittels eines Unterschieds im Vakuum erfolgt.

17. Verfahren gemäß Anspruch 1, **dadurch gekennzeichnet, dass** der Schritt des Füllens erfolgt durch seitliches Einführen der anschwellenden, flüssigen Mischung (M) in die aufnehmende Kammer (C).

18. Verfahren gemäß einem oder mehreren der vorhergehenden Ansprüche, **dadurch gekennzeichnet, dass** der Schritt des Füllens der aufnehmenden Kammer (C) mit der anschwellenden, flüssigen Mischung (M) mit gleichzeitiger Anwendung von Ultraschall erfolgt.

19. Verfahren gemäß Anspruch 1, **dadurch gekennzeichnet, dass** der Schritt b) des Mischens der wässrigen Lösung aus alkalischem Polysilikat mit dem kolloiden Silikat, das dispergiert ist in Wasser, die Bildung einer anschwellenden, flüssigen Mischung (M) ergibt mit einem molaren Verhältnis SiO₂/Me₂O von zwischen 3 und 5.

20. Verfahren gemäß Anspruch 1, **dadurch gekennzeichnet, dass** der Schritt b) des Mischens die Bildung einer anschwellenden, flüssigen Mischung (M) ergibt mit einer Dichte, die größer ist als 1300 kg/m³.

21. Verfahren gemäß Anspruch 1, **dadurch gekennzeichnet, dass** der Schritt des Mischens erfolgt indem auch Zusätze verwendet werden, die aus den Sachariden und/oder Silan ausgewählt sind, die in dem Behälter (3) eingeführt sind.

22. Verfahren gemäß Anspruch 1, **dadurch gekennzeichnet, dass** der Schritt des Mischens erfolgt, indem das hydrierte alkalische Polysilikat in gelöster Form verwendet wird, das aus der Familie gewählt ist, die Sodium Polysilikate, Potassium Polysilikate, Lithium Polysilikate und Mischungen davon umfasst.

23. Verfahren gemäß Anspruch 1, **dadurch gekennzeichnet, dass** die Lagen von transparentem Material aus Materialien gefertigt sind, die ausgewählt sind aus der Gruppe, die Glas, Polycarbonate und ähnliche transparente Materialien umfasst.

24. Verfahren gemäß einem oder mehreren der vorhergehenden Ansprüche, **dadurch gekennzeichnet, dass** die optischen Eigenschaften von jedem geschichteten Element (A) eingestellt werden, indem die Intensität und die Dauer der elektromagnetischen Bestrahlung variiert werden, die auf die anschwellende, flüssige Mischung (M) angewandt wird während des ersten Bestrahlungsschritts oder während des zweiten Bestrahlungsschritts.

25. Verfahren gemäß einem oder mehreren der vorhergehenden Ansprüche, **dadurch gekennzeichnet, dass** die optischen Eigenschaften von jedem geschichteten Element (A) eingestellt werden, indem die Intensität und die Dauer des Ultraschalls variiert werden, die auf die anschwellende, flüssige Mischung (M) angewandt wird während des Schritts b) des Mischens und/oder während des Schritts d) des Entgasens und/oder während des Schritts des Füllens.

26. Verfahren gemäß einem oder mehreren der vorhergehenden Ansprüche, **dadurch gekennzeichnet, dass** die optischen Eigenschaften von jedem geschichteten Element (A) eingestellt werden, indem die Menge des entnommenen Wassers während des Schritts d) des Entgasens variiert wird.

27. Vorrichtung zur Herstellung von hitzebeständigen, transparenten, geschichteten Elementen, die erhalten werden können mit dem Verfahren gemäß einem oder mehreren der vorhergehenden Ansprüche mit
- Rückhalteeinrichtungen (2), die vorgesehen sind zum Halten von zwei oder mehr parallelen, sich gegenüber liegenden, transparenten Lagen (V), die Abstand zueinander haben, um so mindestens eine hermetisch verschlossene, aufnehmende Kammer (C) für Flüssigkeiten zu bilden,
- mindestens einem Behälter (3), der vorgesehen ist zur Aufnahme einer wässrigen Lösung aus alkalischem Polysilikat und kolloiden Silikaten, die dispergiert sind in Wasser und in der Lage sind, eine anschwellende, flüssige Mischung (M) zu bilden,
- Fördereinrichtungen (6) zum Überführen der anschwellenden, flüssigen Mischung (M) von dem Behälter (3) zu der Kammer (C) über die Rückhalteeinrichtungen (2),
- Entgasungseinrichtungen (10), die verbunden sind mit dem Behälter (3) und/oder mit den Rückhalteeinrichtungen (2), um so die anschwellende, flüssige Mischung (M) einem Vakuum auszusetzen mit anschließendem Entzug gelöster Gase und eines Teils Wassers in der Dampfphase,
**dadurch gekennzeichnet, dass** mindestens eine Quelle für elektromagnetische Strahlung (13, 14) vorgesehen ist, die diese anschwellende, flüssige Mischung (M) bestrahlt und eine Frequenz hat von weniger als 30 GHz, um das Mischen und die Polymerisation der anschwellenden, flüssigen Mischung (M) zu verbessern.

28. Vorrichtung gemäß Anspruch 27, **dadurch gekennzeichnet, dass** Rühreinrichtungen (5) vorgesehen sind, die dem Behälter (3) zugeordnet sind zum Mischen der wässrigen Lösung aus alkalischem Polysilikat mit den kolloiden Silikaten, die dispergiert sind in Wasser.

29. Vorrichtung gemäß Anspruch 27, **dadurch gekennzeichnet, dass** Heizeinrichtungen (4) vorgesehen sind, die dem Behälter (3) zugeordnet sind zum Erhitzen der anschwellenden, flüssigen Mischung (M).

30. Vorrichtung gemäß Anspruch 27, **dadurch gekennzeichnet, dass** die Fördereinrichtungen (6) eine erste Leitung (7) umfassen zur Verbindung mit dem Behälter (3) und eine Öffnung (8), die unterhalb der Rückhalteeinrichtungen (2) gebildet ist und mindestens eine Pumpe (9), die in die Leitung (7) eingesetzt ist zum Überführen der anschwellenden, flüssigen Mischung (M) in den aufnehmenden Kammern (C), um so deren zunehmende Füllung von unten zu bewirken.

31. Vorrichtung gemäß Anspruch 27, **dadurch gekennzeichnet, dass** die mindestens eine Quelle für elektromagnetische Strahlung eine erste Bestrahlungsquelle (13) umfasst, die in der Lage ist diese anschwellende, flüssige Mischung (M) zu bestrahlen, die in dem Behälter (3) enthalten ist.

32. Vorrichtung gemäß Anspruch 27, **dadurch gekennzeichnet, dass** die mindestens eine Quelle für elektromagnetische Strahlung eine zweite Quelle (14) elektromagnetischer Strahlung umfasst, die in der Lage ist diese anschwellende, flüssige Mischung (M) zu bestrahlen in den aufnehmenden Kammern (C).

33. Vorrichtung gemäß Anspruch 27, **dadurch gekennzeichnet, dass** mindestens eine Quelle (19) für Ultraschall vorgesehen ist, die in der Lage ist diese anschwellende, flüssige Mischung (M) zu beschallen und eine zweite Quelle (20) für Ultraschall, die in der Lage ist diese anschwellende, flüssige Mischung (M) zu bestrahlen in den aufnehmenden Kammern (C).

34. Vorrichtung gemäß Anspruch 27, **dadurch gekennzeichnet, dass** die Entgasungseinrichtungen (10) eine zweite Leitung (11) umfassen zur Verbindung des oberen Teils des Behälters (3) mit dem oberen Teil der Rückhalteeinrichtungen (2), ein Regulierventil, das in die Leitung (11) eingesetzt ist und Saugeinrichtungen (12), die mit der Leitung (11) verbunden sind, um Überführen der anschwellenden, flüssigen Mischung (M) in den aufnehmenden Kammern (C), um den Behälter (3) und die Rückhalteeinrichtungen (2) einem Vakuum auszusetzen.

35. Vorrichtung gemäß Anspruch 27, **dadurch gekennzeichnet, dass** mindestens ein Tank (21) vorgesehen ist, der eine Flüssigkeit enthält, in die die Rückhalteeinrichtungen (2), die zwei oder mehr parallelen, sich gegenüber liegende Lagen (V) tragen, eingetaucht sind.

36. Vorrichtung gemäß Anspruch 27, **dadurch gekennzeichnet, dass** die anschwellende, flüssige Mischung (M) so gewählt ist, dass sich ein molares Verhältnis SiO₂/Me₂O von zwischen 3 und 5 ergibt.

## Revendications

1. Procédé de fabrication d'éléments stratifiés transparents résistants à la chaleur (A), comprenant les étapes suivantes :
a) préparer au moins deux feuilles de matériau transparent (V) placées sensiblement l'une en face de l'autre et aptes à définir entre elles au moins une chambre réceptrice (C) ;
b) mélanger dans un récipient (3) une solution aqueuse de polysilicate alcalin avec de la silice colloïdale dispersée dans de l'eau, avec formation consécutive d'un mélange liquide intumescent (M) ;
c) chauffer ledit mélange liquide intumescent (M) ;
d) dégazer ledit mélange liquide intumescent (M) avec extraction d'au moins une partie d'eau dans la phase vapeur ;
e) remplir ladite chambre réceptrice (C) avec ledit mélange liquide intumescent (M) ;
f) durcir par polymérisation ledit mélange liquide intumescent (M) à l'intérieur de ladite chambre réceptrice (C) ;
**caractérisé en ce qu'**on prévoit au moins une première étape d'irradiation dudit mélange liquide intumescent (M) au moyen d'un rayonnement électromagnétique à une fréquence de moins de 30 GHz pour améliorer l'action de mélange et la polymérisation de ce mélange.

2. Procédé selon la revendication 1, **caractérisé en ce que** ledit rayonnement électromagnétique se trouve dans la gamme des hyperfréquences, avec une fréquence comprise entre 1 GHz et 30 GHz, et de préférence entre 1 GHz et 3 GHz.

3. Procédé selon la revendication 1, **caractérisé en ce que** ledit rayonnement électromagnétique se trouve dans la gamme des radiofréquences, avec un fréquence comprise entre 5 kHz et 50 MHz et de préférence proche de 27,12 MHz.

4. Procédé selon la revendication 1, **caractérisé en ce que** ladite étape de mélange (b) est exécutée au moyen d'ultrason pendant une durée d'entre 5 et 15 minutes.

5. Procédé selon la revendication 4, **caractérisé en ce que** ledit ultrason a une fréquence de jusqu'à 1 MHz et une intensité d'entre 2x10⁻³ et 0,2 W/cm³.

6. Procédé selon la revendication 1, **caractérisé en ce que** ladite au moins une première étape d'irradiation est exécutée avant ladite étape de remplissage, et dans ledit récipient (3), avec une intensité comprise entre 0,5 et 3 W/cm³ et pendant une durée comprise entre 2 et 20 minutes.

7. Procédé selon la revendication 1, **caractérisé en ce qu'**il comprend au moins une deuxième étape d'irradiation exécutée après ladite étape de remplissage et à l'intérieur de ladite chambre réceptrice (C).

8. Procédé selon la revendication 1, **caractérisé en ce que** ledit mélange liquide intumescent (M) est soumis, après ladite étape de remplissage et à l'intérieur de ladite chambre réceptrice, à un ultrason pendant une durée d'entre 10 et 50 minutes.

9. Procédé selon la revendication 1, **caractérisé en ce que** ladite étape de dégazage (d) est exécutée en soumettant ledit liquide intumescent (M) à un vide d'entre 20 millibars et 500 millibars.

10. Procédé selon une ou plusieurs des revendications précédentes, **caractérisé en ce que**, pendant ladite étape de dégazage, ledit mélange liquide (M) est soumis à un ultrason pendant une durée d'entre 10 et 50 minutes.

11. Procédé selon une ou plusieurs des revendications précédentes, **caractérisé en ce que** ladite étape de chauffage et/ou ladite étape d'irradiation comprennent une extraction partielle d'eau dudit mélange liquide intumescent (M) par évaporation.

12. Procédé selon la revendication 1, **caractérisé en ce que,** pendant ladite étape de préparation (a), les feuilles sont disposées à une distance d l'une de l'autre d'entre 0,1 et 20 mm.

13. Procédé selon la revendication 1, **caractérisé en ce que,** pendant ladite étape de préparation (a), les feuilles sont disposées à une distance d l'une de l'autre d'entre 2 et 9 cm.

14. Procédé selon une ou plusieurs des revendications précédentes, **caractérisé en ce que** lesdites feuilles sont positionnées à l'intérieur d'un réceptacle contenant de l'eau.

15. Procédé selon la revendication 1, **caractérisé en ce que** ladite étape comportant le remplissage de ladite chambre réceptrice (C) avec ledit mélange liquide intumescent (M) est exécutée par remplissage par dessous.

16. Procédé selon la revendication 1, **caractérisé en ce que** ladite étape de remplissage de ladite chambre réceptrice (C) avec ledit mélange liquide intumescent (M) est exécutée au moyen d'une différence de vide.

17. Procédé selon la revendication 1, **caractérisé en ce que** ladite étape de remplissage est exécutée en introduisant ledit mélange liquide intumescent (M) latéralement dans ladite chambre réceptrice (C).

18. Procédé selon une ou plusieurs des revendications précédentes, **caractérisé en ce que** ladite étape de remplissage de ladite chambre réceptrice (C) avec ledit mélange liquide intumescent (M) est exécutée avec application simultanée d'ultrason.

19. Procédé selon la revendication 1, **caractérisé en ce que** ladite étape (b) de mélange de ladite solutions aqueuse de polysilicate alcalin avec ladite silice colloïdale dispersée dans de l'eau a pour résultat la formation d'un mélange liquide intumescent (M) ayant un rapport molaire SiO₂/Me₂O d'entre 3 et 5.

20. Procédé selon la revendication 1, **caractérisé en ce que** ladite étape de mélange (b) a pour résultat la formation d'un mélange liquide intumescent (M) d'une densité supérieure à 1300 kg/m³.

21. Procédé selon la revendication 1,**caractérisé en ce que** ladite étape de mélange est exécutée en utilisant aussi des adhésifs choisis parmi les saccharides et/ou les silanes introduits à l'intérieur dudit récipient (3).

22. Procédé selon la revendication 1, **caractérisé en ce que** ladite étape de mélange est exécutée en utilisant ledit polysilicate alcalin hydraté sous la forme d'une solution, choisi parmi la famille qui comprend le polysilicate de sodium, le polysilicate de potassium, le polysilicate de lithium et des mélanges de ceux-ci.

23. Procédé selon la revendication 1, **caractérisé en ce que** lesdites feuilles de matériau transparent sont faites de matériaux choisis dans le groupe comprenant le verre, le polycarbonate et des matériaux transparents similaires.

24. Procédé selon une ou plusieurs des revendications précédentes, **caractérisé en ce qu'**on ajuste les propriétés optiques de chaque élément stratifié (A) en faisant varier l'intensité et la durée du rayonnement électromagnétique appliqué audit mélange liquide intumescent (M) pendant ladite première étape d'irradiation ou pendant ladite deuxième étape d'irradiation.

25. Procédé selon une ou plusieurs des revendications précédentes, **caractérisé en ce qu'**on ajuste les propriétés optiques de chaque élément stratifié (A) en faisant varier l'intensité et la durée de l'ultrason appliqué audit mélange liquide intumescent (M) pendant ladite étape de mélange b) et/ou pendant ladite étape de dégazage d) et/ou pendant ladite étape de remplissage.

26. Procédé selon une ou plusieurs des revendications précédentes, **caractérisé en ce qu'**on ajuste les propriétés optiques de chaque élément stratifié (A) en faisant varier la quantité d'eau extraite pendant ladite étape de dégazage d).

27. Appareil pour la production d'éléments stratifiés transparents résistants à la chaleur qui peuvent être obtenus au moyen du procédé selon une ou plusieurs des revendications précédentes, comprenant :
- des moyens de retenue (2) destinés à supporter deux ou plus de deux feuilles transparentes parallèles (V), disposées face à face, qui sont espacées l'une de l'autre de manière à définir au moins une chambre réceptrice correspondante (C) hermétiquement fermée pour fluides ;
- au moins un récipient (3) destiné à recevoir une solution aqueuse de polysilicate alcalin et de silice colloïdale dispersée dans de l'eau qui sont aptes à former un mélange liquide intumescent (M) ;
- des moyens de circulation (6) pour transférer ledit mélange liquide intumescent (M) dudit récipient (3) à ladite chambre (C) par l'intermédiaire desdits moyens de retenue (2) ;
- des moyens de dégazage (10) reliés audit récipient (3) et/ou auxdits moyens de retenue (2) de manière à soumettre ledit mélange liquide intumescent (M) à un vide, avec extraction consécutive de gaz dissous et d'une partie d'eau dans la phase vapeur ;
**caractérisé en ce qu'**il comprend au moins une source de rayonnement électromagnétique (13, 14) qui irradie ledit mélange liquide intumescent (M) et possède une fréquence de moins de 30 GHz pour améliorer l'action de mélange et la polymérisation dudit mélange liquide intumescent (M).

28. Appareil selon la revendication 27, **caractérisé en ce qu'**il comprend des moyens d'agitation (5) associés audit récipient (3) pour mélanger ladite solution aqueuse de polysilicate alcalin avec ladite de silice colloïdale dispersée dans de l'eau.

29. Appareil selon la revendication 27, **caractérisé en ce qu'**il comprend des moyens de chauffage (4) associés audit récipient (3) pour chauffer ledit mélange liquide intumescent (M).

30. Appareil selon la revendication 27, **caractérisé en ce que** lesdits moyens de circulation (6) comprennent un premier conduit (7) pour relier ledit récipient (3) et une ouverture (8) formée au-dessous desdits moyens de retenue (2) et au moins une pompe (9) intercalée dans ledit conduit (7) pour transporter ledit mélange liquide intumescent (M) à l'intérieur desdites chambres réceptrices (C), en assurant leur remplissage progressif par dessous.

31. Appareil selon la revendication 27, **caractérisé en ce que** ladite au moins une source de rayonnement électromagnétique comprend une première source d'irradiation (13) capable d'irradier ledit mélange liquide intumescent (M) contenu dans ledit récipient (3).

32. Appareil selon la revendication 27, **caractérisé en ce que** ladite au moins une source de rayonnement électromagnétique comprend une deuxième source de rayonnement électromagnétique (14) capable d'irradier ledit mélange liquide intumescent (M) à l'intérieur desdites chambres réceptrices (C).

33. Appareil selon la revendication 27, **caractérisé en ce qu'**il comprend au moins une source d'ultrason (19) capable de soumettre ledit mélange liquide intumescent (M) à l'action du son et une deuxième source d'ultrason (20) capable d'irradier ledit mélange liquide intumescent (M) à l'intérieur desdites chambres réceptrices (C).

34. Appareil selon la revendication 27, **caractérisé en ce que** lesdits moyens de dégazage (10) comprennent un deuxième conduit (11) pour relier la partie sommitale dudit récipient (3) à la partie sommitale desdits moyens de retenue (2), une vanne de réglage intercalée dans ledit deuxième conduit (11) et des moyens de succion (12) reliés audit deuxième conduit (11) pour soumettre ledit récipient (3) et lesdits moyens de retenue (2) à un vide.

35. Appareil selon la revendication 27, **caractérisé en ce qu'**il comprend au moins un réservoir (21) contenant un liquide à l'intérieur duquel sont immergés les moyens de retenue (2) qui supportent deux ou plus de deux feuilles parallèles disposées face à face (V).

36. Appareil selon la revendication 27, **caractérisé en ce que** ledit mélange liquide intumescent (M) est choisi de manière à avoir un rapport molaire Si0₂/Me₂0 compris entre 3 et 5.
